(19) **Europäisches Patentamt**

**European Patent Office**

**Office européen des brevets**

(11) **EP 1 244 870 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(21) Anmeldenummer: **00979318.3**

(22) Anmeldetag: **13.12.2000**

(51) Int Cl.[7]: **F02C 7/045**, F02C 6/12, F04D 29/66

(86) Internationale Anmeldenummer:
**PCT/CH2000/000662**

(87) Internationale Veröffentlichungsnummer:
**WO 2001/050000 (12.07.2001 Gazette 2001/28)**

(54) **SCHALLDÄMPFER FÜR DEN VERDICHTER EINES ABGASTURBOLADERS**

SILENCER FOR THE COMPRESSOR OF AN EXHAUST GAS TURBOCHARGER

SILENCIEUX POUR LE COMPRESSEUR D'UN TURBOCOMPRESSEUR A GAZ D'ECHAPPEMENT

(84) Benannte Vertragsstaaten:
**DE FR GB**

(30) Priorität: **07.01.2000 DE 10000418**

(43) Veröffentlichungstag der Anmeldung:
**02.10.2002 Patentblatt 2002/40**

(73) Patentinhaber: **ABB Turbo Systems AG
5400 Baden (CH)**

(72) Erfinder:
 • **FELD, Heinz-Jürgen
 CH-5524 Niederwil (CH)**
 • **GIRSBERGER, Rolf
 CH-5408 Ennetbaden (CH)**
 • **ASCHENBRENNER, Silvia
 CH-5408 Ennetbaden (CH)**

(74) Vertreter: **ABB Patent Attorneys
c/o ABB Schweiz AG,
Intellectual Property (CH-LC/IP),
Brown Boveri Strasse 6
5400 Baden (CH)**

(56) Entgegenhaltungen:
 **EP-A- 0 509 782          DE-A- 4 212 653
 US-A- 4 421 455**

 • **YUNOKI K: "A calculating method of the eigenvalue equation for a circular sound-absorbing duct" JOURNAL OF THE ACOUSTICAL SOCIETY OF JAPAN, FEB. 1991, JAPAN, Bd. 47, Nr. 2, Februar 1991 (1991-02), Seiten 81-84, XP002161966 ISSN: 0369-4232**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

### Technisches Gebiet

Die Erfindung betrifft einen Verdichter eines Abgasturboladers gemäss dem Oberbegriff des Anspruchs 1, wie z.B. in der US 4 421 455 A offenbart.

### Stand der Technik

Massgeblich für die Lärmemission eines Abgasturboladers ist der Verdichter. Insbesondere strahlt der Verdichtereintritt sehr viel Lärm nach aussen ab. Zur Reduktion des Ansauglärms werden häufig vorgeschaltete Schalldämpfer eingesetzt, die kanalartige oder kulissenartige Elemente aufweisen, welche ihrerseits mit schallabsorbierendem Material ausgekleidet sind. Neben solchen Absorptionsschalldämpfern können auch akustische Resonatoren und akustische Filter zur Schalldämpfung eingesetzt werden.

Bei den heutigen Abgasturboladern führen steigende Druckverhältnisse und wachsender Durchsatz zu höheren Schallemissionen am Verdichtereintritt. Mit den bisherigen Schalldämpferkonzepten wird es zunehmend schwieriger, bei begrenztem Bauraum, ausreichend tiefe Lärmwerte des Abgasturboladers mit akzeptablem Druckverlust zu erreichen, ohne dass kostspielige externe Zusatzmassnahmen getroffen werden.

Zudem wurde festgestellt, dass mit den herkömmlichen, dem Verdichter vorgeschalteten einstufigen Schalldämpfern eine maximale Schalldämpfung von 50 - 60 dB erzielt werden kann. Dies ist jedoch unter Umständen insbesondere beim ersten Verdichterdrehton nicht ausreichend.

Aus der DE19818873 A1 sind auf dem Prinzip des Helmholtz-Resonators beruhende, wandbündig angeordnete Schalldämpfer für einen Abgasturbolader bekannt. Ein solcher Schalldämpfer ist unter anderem auch im Ansaugstutzen des Verdichters, bis unmittelbar stromauf der Laufschaufeln des Verdichterrades angeordnet. Generell kann gesagt werden, dass die Dämpfungswirkung dieser Schalldämpfer bei geringeren Strömungsgeschwindigkeiten gut ist, aber mit zunehmender Strömungsgeschwindigkeit abnimmt. Da jedoch unmittelbar stromauf des Verdichterrades sehr hohe Strömungsgeschwindigkeiten von bis zu 150 m/s auftreten, ist die schalldämpfende Wirkung eines auf dem Prinzip des Helmholtz-Resonators beruhenden Schalldämpfers nicht mehr gewährleistet.

### Darstellung der Erfindung

Die Erfindung versucht alle diese Nachteile zu vermeiden. Ihr liegt die Aufgabe zugrunde, für Abgasturbolader-Verdichter einen Schalldämpfer zu schaffen, welcher sich durch eine verbesserte Schalldämpfung auszeichnet und dabei insbesondere den ersten Drehton dämpft.

Erfindungsgemäss wird dies dadurch erreicht, dass bei einer Vorrichtung gemäss dem Oberbegriff des Anspruchs 1, zumindest ein wirksamer, d.h. schalldämpfender Teil des Schalldämpfers in einem axialen Bereich des Strömungskanals angeordnet ist, der einerseits durch die Laufschaufeln und andererseits durch einen Maximaldurchmesser ($d_{max}$) des Strömungskanals begrenzt ist, welcher Maximaldurchmesser ($d_{max}$) sich daraus ergibt, dass neben der 0. Radialmode ($Z_r$,0) auch die 1. Radialmode ($Z_r$,1) ausbreitungsfähig wird. Unter Vernachlässigung der Strömung ergibt sich dieser Maximaldurchmesser aus der Beziehung

$$d_{max} = \frac{a \cdot j'(Z_r,1)}{\pi \cdot n_{TL} \cdot Z_r},$$

mit a = Schallgeschwindigkeit, $j'(Z_r,1)$ = Eigenwert der ($Z_r$,1)-Mode, $Z_r$ = Laufschaufelzahl und mit $n_{TL}$ = Drehzahl des Abgasturboladers, für welche der Schalldämpfer ausgelegt ist. Dabei beträgt diese Auslegungsdrehzahl zumindest zwei Drittel der Maximaldrehzahl des Abgasturboladers. Bei Berücksichtigung der Strömung wird die 1. Radialmode ($Z_r$,1) etwas früher ausbreitungsfähig.

Zudem ist der Schalldämpfer radial ausserhalb des Strömungskanals angeordnet, wobei zwischen dem Strömungskanal und dem Schalldämpfer eine den letzteren vom Strömungskanal trennende, jedoch akustisch transparente Abdeckung angeordnet ist.

Aufgrund seiner Anordnung ausserhalb des Strömungskanals des Arbeitsmediums des Verdichters und zudem getrennt von diesem Arbeitsmedium wird der Schalldämpfer vor den im Bereich unmittelbar stromauf des Verdichterrades herrschenden hohen Strömungsgeschwindigkeiten geschützt. Daher können sowohl solche Schalldämpfer verwendet werden, die bei hohen Strömungsgeschwindigkeiten keine ausreichende Lebensdauer besitzen als auch solche Schalldämpfer, deren Funktionsfähigkeit bei diesen Strömungsgeschwindigkeiten normalerweise nicht gewährleistet ist. Infolge der Anordnung zumindest eines wirksamen Teils des Schalldämpfers unmittelbar stromauf der Laufschaufeln des Verdichterrades bis hin zum Maximaldurchmesser ($d_{max}$) des Strömungskanals, werden aufgrund der speziellen modalen Struktur des Schallfeldes besonders die Verdichterdrehtöne, dabei speziell der erste Verdichterdrehon, sehr wirksam gedämpft. Dadurch wird die Schalldämpfung insgesamt deutlich verbessert.

Besonders vorteilhaft wird zwischen der Abdeckung und dem Schalldämpfer ein Trennspalt ausgebildet, welcher dem Schutz des Schalldämpfers vor der Strömung des Arbeitsmediums dient. Ein solcher Trennspalt ist besonders bei Helmholtz-Resonatoren vorteilhaft und/oder wenn die Abdeckung allein als Schutz des Schalldämpfers vor der Strömung des Arbeitsmediums nicht ausreicht. Demnach hängt es nicht nur von der Art der verwendeten Abdeckung, sondern auch vom Schalldämpfer ab, ob ein zusätzlicher Trennspalt auszubilden ist.

Besonders zweckmässig ist es, als akustisch transparente Abdeckung ein Gewebe, ein Vlies oder ein gelochtes, flächiges Element auszubilden. Entsprechende strömungs- und wärmeresistente Gewebe (z.B. Glas- oder Metallgewebe) oder Vliese (z.B. Glasvlies) sind kostengünstig und in vielen verschiedenen Varianten zu erhalten. Dagegen ist bei der Verwendung eines gelochten, flächigen Elementes aufgrund dessen Eigensteifigkeit vorteilhaft keinerlei Stützkonstruktion erforderlich.

Radial ausserhalb der verwendeten Abdeckung kann vorteilhaft ein sich sowohl radial als auch axial erstreckendes, schallführendes Element angeordnet werden, an welches der Schalldämpfer anschliesst. Auf diese Weise wird der Schall auf einen anderen Durchmesser als die Strömung geleitet und dort absorbiert. Damit erfolgt eine Trennung des Schalls von der Strömung, was eine besonders wirksame Schalldämpfung ermöglicht.

Schliesslich wird mit Vorteil stromauf des Verdichters ein herkömmlicher Schalldämpfer angeordnet. Damit kann eine wirksame Kombination der beiden Schalldämpfer erreicht werden, wobei der herkömmliche Schalldämpfer das Rauschen sowie die am Verdichtereintritt entstehenden Drehtöne und der unmittelbar stromauf des Verdichterrades angeordnete, erfindungsgemässe Schalldämpfer zusätzlich die im unmittelbaren Bereich des Verdichterrades entstehenden Drehtöne dämpft. Mit einer solchen Kombination kann bei verbesserter Wirkung zudem auch die Grösse des herkömmlichen Schalldämpfers reduziert werden, so dass der gesamte Abgasturbolader axial weniger Bauraum benötigt.

## Kurze Beschreibung der Zeichnung

In der Zeichnung sind mehrere Ausführungsbeispiele der Erfindung anhand eines Abgasturboladers dargestellt.

Es zeigen:

Fig. 1 einen Teillängsschnitt durch die Verdichterseite eines Abgasturboladers des Standes der Technik;
Fig. 2 einen Ausschnitt aus Fig. 1 im Bereich des Verdichterrades, mit dem erfindungsgemässen Schalldämpfer;
Fig. 3 die Radialverteilung des Schalldruckes der Mode $Z_r,0$ und $Z_r,1$ für eine Laufschaufelzahl $Z_r = 10$ (berechnete Werte);
Fig. 4 eine Darstellung gemäss Fig. 2, jedoch in einem zweiten Ausführungsbeispiel;
Fig. 5 eine Darstellung gemäss Fig. 2, jedoch in einem dritten Ausführungsbeispiel.

Es sind nur die für das Verständnis der Erfindung wesentlichen Elemente gezeigt. Nicht dargestellt sind beispielsweise die Turbinenseite des Abgasturboladers sowie die mit dem Abgasturbolader verbundene Brennkraftmaschine.

## Weg zur Ausführung der Erfindung

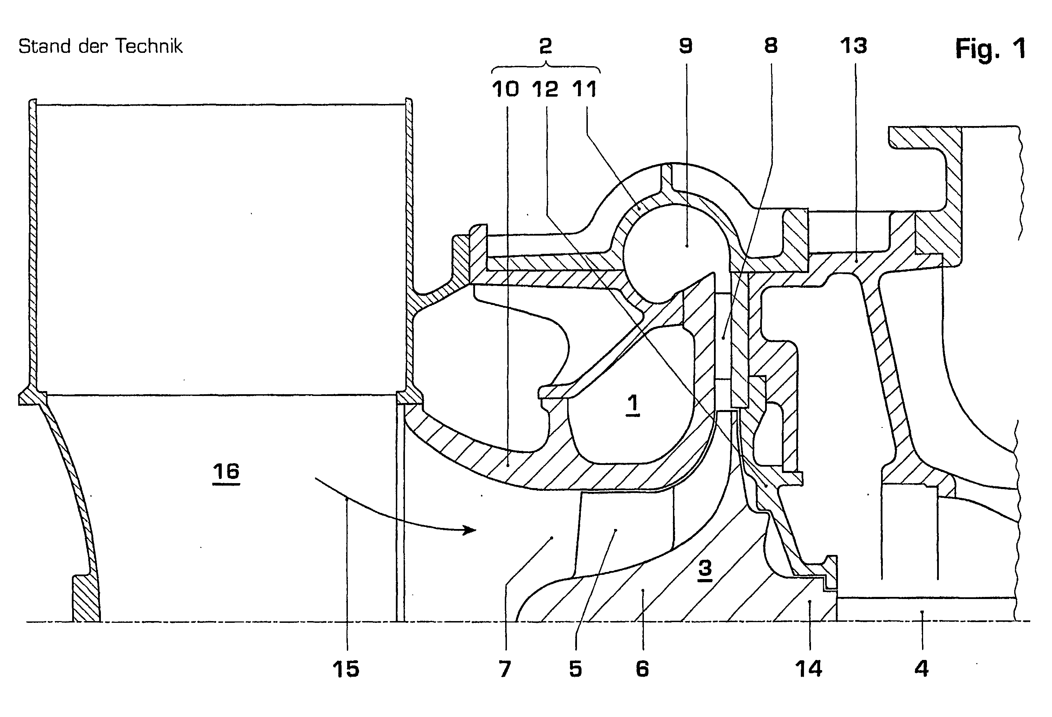

Die Figur 1 zeigt den Teillängsschnitt durch einen Abgasturbolader des Standes der Technik. Dieser Abgasturbolader besteht hauptsächlich aus einem als Radialverdichter ausgebildeten Verdichter 1 und einer nicht dargestellten Abgasturbine. Der Verdichter 1 ist mit einem Verdichtergehäuse 2 ausgestattet, in dem ein Verdichterrad 3 angeordnet ist. Das Verdichterrad 3 ist mit dem ebenfalls nicht dargestellten Turbinenlaufrad drehbar auf einer gemeinsamen Welle 4 gelagert. Es besitzt eine mit einer Vielzahl von Laufschaufeln 5 besetzte Nabe 6. Zwischen der Nabe 6 und dem Verdichtergehäuse 2 ist ein Strömungskanal 7 ausgebildet. Stromab der Laufschaufeln 5 schliesst an den Strömungskanal 7 ein radial angeordneter, beschaufelter Diffusor 8 an, welcher seinerseits in eine Spirale 9 des Verdichters 1 mündet. Das Verdichtergehäuse 2 besteht hauptsächlich aus einem Lufteintrittgehäuse 10, einem Luftaustrittgehäuse 11 und einer Zwischenwand 12 zu einem Lagergehäuse 13 des Abgasturboladers. Die Nabe 6 weist turbinenseitig eine Befestigungsmuffe 14 für die Welle 4 auf. Die Befestigungsmuffe 14 wird von der Zwischenwand 12 des Verdichtergehäuses 2 aufgenommen.

Beim Betrieb der mit dem Abgasturbolader verbundenen Brennkraftmaschine werden deren Abgase über das Turbinenlaufrad der Abgasturbine entspannt, welches seinerseits für den Antrieb des mit ihm über die Welle 4 verbundenen Verdichterrades 3 sorgt. Dadurch saugt das Verdichterrad 3 als Arbeitsmedium 15 Umgebungsluft an, die über den Strömungskanal 7 sowie den Diffusor 8 in die Spirale 9 gelangt, dort weiter verdichtet und schliesslich über eine an das Luftaustrittgehäuse 11 anschliessende, nicht dargestellte Ladeluftleitung zur Aufladung, d.h. zur Leistungssteigerung der Brennkraftmaschine eingesetzt wird. Die insbesondere beim Ansaugvorgang der Umgebungsluft entstehenden Geräusche werden mittels eines dem Lufteintrittgehäuse 10 vorgeordneten Schalldämpfers 16 gedämpft.

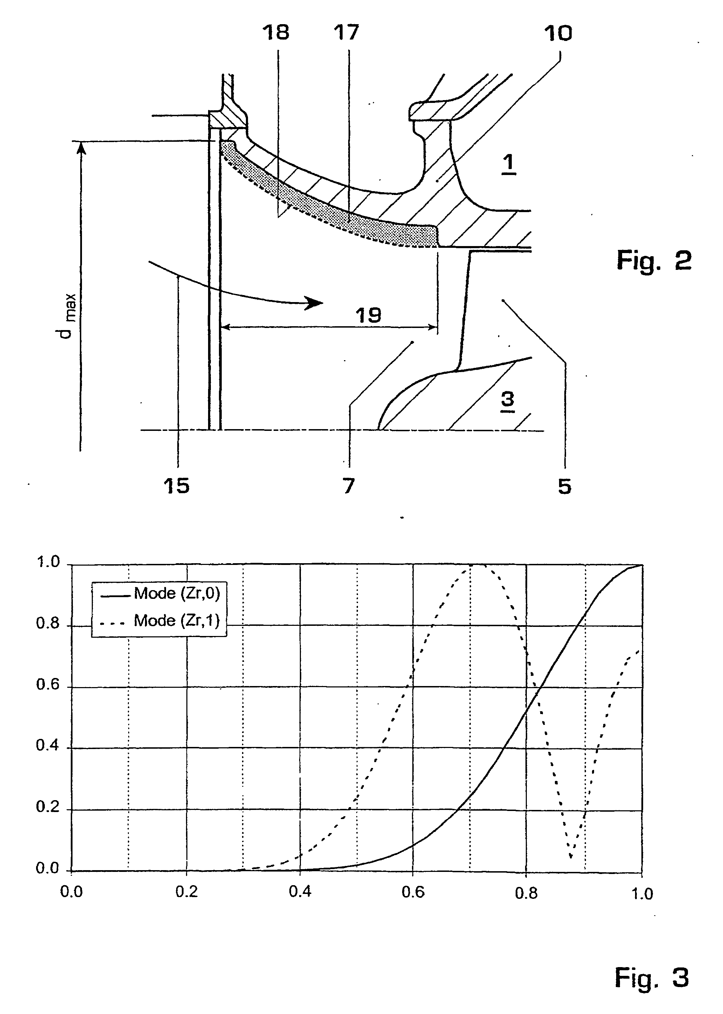

Demgegenüber besitzt der erfindungsgemässe Verdichter 1 einen unmittelbar stromauf der Laufschaufeln 5 des Verdichterrades 3 angeordneten Schalldämpfer 17, welcher im Lufteintrittgehäuse 10, radial ausserhalb des Strömungskanals 7 positioniert ist. Dabei ist zwischen dem Strömungskanal 7 und dem Schalldämpfer 17 eine den letzteren vom Strömungskanal 7 trennende, akustisch transparente Abdeckung 18 angeordnet (Fig. 2).

Der in die Wandkontur des Lufteintrittgehäuses 10 integrierte Schalldämpfer 17 dient der Dämpfung der an den Laufschaufeln 5 entstehenden Drehtöne und dämpft dabei insbesondere den ersten Drehton. Dieser erste Drehton breitet sich in Form von sogenannten Spinning Modes aus. Jede dieser Spinning Modes hat eine Grenzfrequenz (Cut-On-Frequenz) ab der sie ausbreitungsfähig ist. Der überwiegende Anteil des ersten Verdichterdrehtones wird als Mode mit der azimutalen Modenordnung (Anzahl der Druckberge am Umfang), die der Hauptschaufelzahl $Z_r$ des Verdichters 1 entspricht, abgestrahlt. Dies ist insbesondere bei höheren Drehzahlen der Fall. Niedrigere Azimutalmoden, die bei der Lauf-/Leitschaufelinteraktion entstehen, werden hier aufgrund der hohen Strömungsgeschwindigkeiten im Verdichterrad 3 nur untergeordnet am Eintritt wirksam. In einem begrenzten Durchmesserbereich des Strömungskanals 7 ist nur die Mode mit radialer Ordnung 0 ($Z_r$,0-Mode) ausbreitungsfähig, die übrigen liegen unterhalb der Cut-On-Frequenz. Die radiale Ordnung gibt die Anzahl der Nulldurchgänge der Druckverteilung über dem Radius an. In Fig. 3 ist die Radialverteilung des Schalldruckes der Mode $Z_r$,0 und $Z_r$,1 für eine Schaufelanzahl $Z_r$ = 1 dargestellt, wobei auf der Ordinatenachse der Betrag des relativen Schalldruckes und auf der Abszissenachse der relative Radius aufgetragen ist.

Bei den gegebenen geometrischen Bedingungen in der Nähe der Laufschaufeln 5 des Verdichterrades 3 ist lediglich die ($Z_r$,0)-Mode ausbreitungsfähig, welche somit zur dominierenden Mode wird. Hier liegt das Maximum der abgestrahlten Schallleistung in der Nähe der Innenwand des Lufteintrittgehäuses 10. Daher ist ein Schalldämpfer 17 in diesem Bereich besonders wirksam. Demgegenüber wird die Wirkung insbesondere dann niedriger, wenn die ($Z_r$,1)-Mode ausbreitungsfähig ist, was ab einem bestimmten Maximaldurchmesser $d_{max}$ des durch das Lufteintrittgehäuse 10 begrenzten Strömungskanals 7 möglich ist.

Daraus abgeleitet muss der Maximaldurchmesser $d_{max}$, auf dem der erfindungsgemässe Schalldämpfer 17 mit zumindest einem wirksamen, d.h. schalldämpfenden Teil liegen sollte, so gewählt werden, dass die ($Z_r$,1)-Mode noch nicht ausbreitungsfähig ist. Unter Vernachlässigung der Strömung ergibt sich dieser Durchmesser aus folgender Beziehung:

$$d_{max} = \frac{a \cdot j'(Z_r,1)}{\pi \cdot n_{TL} \cdot Z_r} \ ,$$

mit a = Schallgeschwindigkeit, $j'(Z_r,1)$ = Eigenwert der ($Z_r$,1)-Mode, $Z_r$ = Laufschaufelzahl und mit $n_{TL}$ = Drehzahl des Abgasturboladers, für die der Schalldämpfer ausgelegt ist. Dabei beträgt diese Auslegungsdrehzahl zumindest zwei Drittel der Maximaldrehzahl des Abgasturboladers.

Die interessierenden Eigenwerte j' ($Z_r$, n) für übliche Laufschaufelzahlen sind in der folgenden Tabelle aufgeführt:

| $Z_r$ | 7 | 8 | 9 | 10 | 11 | 12 | 13 | 14 | 15 |
|---|---|---|---|---|---|---|---|---|---|
| $j'(Z_r,0)$ | 8.6 | 9.6 | 10.7 | 11.8 | 12.8 | 13.9 | 14.9 | 16.0 | 17.0 |
| $j'(Z_r,1)$ | 12.9 | 14.1 | 15.3 | 16.4 | 17.6 | 18.7 | 19.9 | 21.0 | 22.1 |

Nachfolgend wurde der beschriebene Durchmesserbereich des Strömungskanals 7 zur Anordnung des Schalldämpfers 17 beispielhaft für einen Abgasturbolader mit zehn Laufschaufeln 5 des Verdichterrades 3 und mit einem Verdichtereintrittsdurchmesser von 300mm ermittelt. Da Abgasturbolader üblicherweise bei atmosphärischen Bedingungen eingesetzt werden, beträgt die zur Berechnung zu verwendende Schallgeschwindigkeit a etwa 340 m/s. Als Drehzahl $n_{TL}$ des Abgasturboladers, für die der Schalldämpfer ausgelegt ist, wurden 425 Umdrehungen pro Sekunde angesetzt. Mit dieser Drehzahl ergibt sich nach o.a. Gleichung ein Maximaldurchmesser $d_{max}$ von:

$$d_{max} = \frac{340 \text{m} \cdot \text{s}^{-1} \cdot 16{,}4}{\pi \cdot 425 \cdot \text{s}^{-1} \cdot 10} = 0{,}416\text{m}.$$

Daraus folgt, dass der wirksame Durchmesserbereich für den Schalldämpfer 17 in diesem Beispiel in einem axialen Bereich 19 des Strömungskanals 7 des Verdichtergehäuses 2 liegt, in dem der Strömungskanal 7 einen Durchmesser zwischen 300mm (Eintritt des Verdichters 1) und 416mm aufweist. Demnach muss der Schalldämpfer 17, bzw. zumindest ein wirksamer, d.h. schalldämpfender Teil des Schalldämpfers 17, in dem angegeben axialen Bereich 19 angeordnet werden, um die (Z_r,0)-Mode und damit insbesondere den ersten Drehton wirksam zu dämpfen.

Bei einer höheren Drehzahl des Abgasturboladers als der Drehzahl, für die der Schalldämpfer 17 ausgelegt ist, liegt lediglich ein Teil des Schalldämpfers 17 im oben berechneten axialen Bereich 19 des Strömungskanals 7 (nicht dargestellt). Dagegen wird bei einer geringeren Drehzahl des Abgasturboladers mit dem Schalldämpfer 17 lediglich ein Teil des mit dieser Drehzahl berechneten axialen Bereichs 19 des Strömungskanals 7 abgedeckt (ebenfalls nicht dargestellt).

Als Schalldämpferelemente können verschiedene Ausführungen oder auch Kombinationen von diesen zur Anwendung kommen. Dies sind zum Beispiel einfache absorbierende Elemente, Filterelemente (Tiefpass) oder auch Resonatoren (Helmholtz-Resonator). Die Abdeckung 18 dient dem Schutz dieser Elemente vor den hohen Strömungsgeschwindigkeiten im Bereich unmittelbar stromauf des Verdichterrades 3. Dabei besteht die Abdeckung 18 aus einem strömungs- und wärmeresistenten Gewebe, wie z. B. Glas- oder Metallgewebe. Natürlich kann ebenso ein Vlies (z.B. Glasvlies) oder eine Folie (z.B. eine Teflonfolie) mit einer entsprechenden Stützkonstruktion verwendet werden (nicht dargestellt).

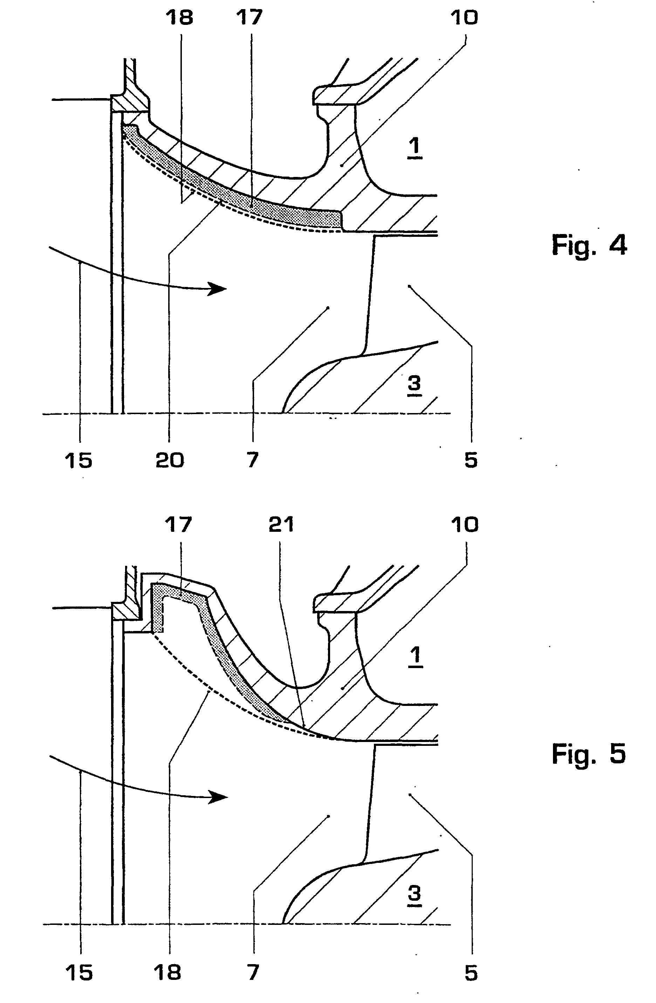

In einem zweiten Ausführungsbeispiel besteht die Abdeckung 18 aus einem gelochten, flächigen Element, konkret aus einem Lochblech, wobei zwischen der Abdeckung 18 und dem Schalldämpfer 17 ein Trennspalt 20 ausgebildet ist (Fig. 4). Dieser Trennspalt 20 dient dem zusätzlichen Schutz des Schalldämpfers 17 vor der Hauptströmung des Arbeitsmediums 15. Das Lochblech ist mittels nicht dargestellten Schweisspunkten am Lufteintrittgehäuse 10 befestigt.

Gemäss einem dritten Ausführungsbeispiel ist radial ausserhalb der Abdeckung 18 ein sich sowohl radial als auch axial erstreckendes, schallführendes Element 21 angeordnet, an welches der Schalldämpfer 17 anschliesst (Fig. 5). Dabei findet eine Trennung von Strömung und Schall statt, indem der Schall durch das schallführende Element 21 auf einen anderen Durchmesser als die Strömung des Arbeitsmediums 15 geleitet und schliesslich im Schalldämpfer 17 absorbiert wird.

Bei allen Ausführungsbeispielen kann zur Verbesserung der schalldämpfenden Wirkung stromauf des Verdichters 1 zusätzlich ein konventioneller Schalldämpfer 16 angeordnet werden (nicht dargestellt).

**Bezugszeichenliste**

| | |
|---|---|
| 1 | Verdichter |
| 2 | Verdichtergehäuse |
| 3 | Verdichterrad |
| 4 | Welle |
| 5 | Laufschaufel |
| 6 | Nabe |
| 7 | Strömungskanal |
| 8 | Diffusor |
| 9 | Spirale |
| 10 | Lufteintrittgehäuse |
| 11 | Luftaustrittgehäuse |
| 12 | Zwischenwand |
| 13 | Lagergehäuse |
| 14 | Befestigungsmuffe |
| 15 | Arbeitsmedium |
| 16 | Schalldämpfer, konventioneller |
| 17 | Schalldämpfer, erfindungsgemässer |
| 18 | Abdeckung |
| 19 | axialer Bereich |
| 20 | Trennspalt |

21      schallführendes Element

$d_{max}$    Maximaldurchmesser, von 7

**Patentansprüche**

1. Verdichter eines Abgasturboladers, mit einem Verdichterrad (3) mit Laufschaufeln (5), einem Verdichtergehäuse (2), einem zwischen dem Verdichterrad (3) und dem Verdichtergehäuse (2) ausgebildeten Strömungskanal (7) für ein Arbeitsmedium (15) des Verdichters (1) sowie einem unmittelbar stromauf der Laufschaufeln (5) angeordneten Schalldämpfer (17) wobei der Schalldämpfer (17) radial ausserhalb des Strömungskanals (7) angeordnet ist und zwischen dem Strömungskanal (7) und dem Schalldämpfer (17) eine den letzteren vom Strömungskanal (7) trennende, akustisch transparente Abdeckung (18) angeordnet ist, **dadurch gekennzeichnet, dass** zumindest ein schalldämpfender Teil des Schalldämpfers (17) in einem axialen Bereich (19) des Strömungskanals (7) angeordnet ist, der einerseits durch die Laufschaufeln (5) und andererseits durch einen Maximaldurchmesser ($d_{max}$) des Strömungskanals (7) begrenzt ist, welcher Maximaldurchmesser ($d_{max}$) sich aus der Beziehung

$$d_{max} = \frac{a \cdot j'(Z_r, 1)}{\pi \cdot n_{TL} \cdot Z_r}$$

ergibt, mit a = Schallgeschwindigkeit, $j'(Z_r, 1)$ = Eigenwert der $(Z_r, 1)$-Mode, mit $Z_r$ = Laufschaufelzahl und $n_{TL}$ = Drehzahl des Abgasturboladers, für die der Schalldämpfer (17) ausgelegt ist, wobei diese Auslegungsdrehzahl zumindest zwei Drittel der Maximaldrehzahl des Abgasturboladers beträgt.

2. Verdichter nach Anspruch 1, **dadurch gekennzeichnet, dass** ein Gewebe, ein Vlies oder ein gelochtes, flächiges Element als akustisch transparente Abdeckung (18) ausgebildet ist.

3. Verdichter nach Anspruch 1 oder 2, **dadurch gekennzeichnet, dass** zwischen der Abdeckung (18) und dem Schalldämpfer (17) ein Trennspalt (20) ausgebildet ist.

4. Verdichter nach Anspruch 1 oder 2, **dadurch gekennzeichnet, dass** radial ausserhalb der Abdeckung (18) ein sich sowohl radial als auch axial erstreckendes, schallführendes Element (21) angeordnet ist, an welches der Schalldämpfer (17) anschliesst.

5. Verdichter nach einem der vorherigen Ansprüche, **dadurch gekennzeichnet, dass** stromauf des Verdichters (1) ein herkömmlicher Schalldämpfer (16) angeordnet ist.

**Claims**

1. Compressor of an exhaust gas turbocharger, having a compressor impeller (3) with impeller vanes (5), a compressor casing (2), a flow duct (7), which is formed between the compressor impeller (3) and the compressor casing (2), for a working medium (15) of the compressor (1), and having a silencer (17) arranged directly upstream of the impeller vanes (5), the silencer (17) being arranged radially outside the flow duct (7) and an acoustically transparent shroud (18) being arranged between the flow duct (7) and the silencer (17) and separating the latter from the flow duct (7), **characterized in that**

a) at least one sound-attenuating part of the silencer (17) is arranged in an axial region (19) of the flow duct (7), which region is bounded, on the one hand, by the impeller vanes (5) and, on the other hand, by a maximum diameter ($d_{max}$) of the flow duct (7), which maximum diameter ($d_{max}$) is given by the relationship

$$d_{max} = \frac{a \cdot j'(Z_r, 1)}{\pi \cdot n_{TL} \cdot Z_r}$$

where a = sonic velocity, $j'(Z_r, 1)$ = Eigen value of the $(Z_r, 1)$ mode, where $Z_r$ = number of impeller vanes and where $n_{TL}$ = rotational speed of the exhaust gas turbocharger, for which the silencer (17) is designed, this design rotational speed being at least two-thirds of the maximum rotational speed of the exhaust gas turbocharger.

2. Compressor according to Claim 1, **characterized in that** a woven fabric, a non-woven fabric or a perforated, flat element is configured as the acoustically transparent shroud (18).

3. Compressor according to Claim 1 or 2, **characterized in that** a separating gap (20) is configured between the shroud (18) and the silencer (17).

4. Compressor according to Claim 1 or 2, **characterized in that** a sound-conducting element (21), which extends both radially and axially and on which the silencer (17) abuts, is arranged outside the shroud (18).

5. Compressor according to one of the preceding claims, **characterized in that** a conventional silencer (16) is arranged upstream of the compressor (1).

**Revendications**

1. Compresseur d'un turbocompresseur à gaz d'échappement, avec une roue de compresseur (3) avec des palettes mobiles (5), un corps de compresseur (2), un canal d'écoulement (7) formé entre la roue de compresseur (3) et le corps de compresseur (2) pour un fluide de service (15) du compresseur (1) ainsi qu'un silencieux (17) monté immédiatement en amont des palettes mobiles (5), dans lequel le silencieux (17) est monté radialement à l'extérieur du canal d'écoulement (7), et entre le canal d'écoulement (7) et le silencieux (17) est monté un capot (18) acoustiquement transparent séparant ce dernier du canal d'écoulement (7), **caractérisé en ce que** au moins une partie amortissant le bruit du silencieux (17) est montée dans une zone axiale (19) du canal d'écoulement (7) qui est limitée d'une part par les palettes mobiles (5) et d'autre part par un diamètre maximal ($d_{max}$) du canal d'écoulement (7), lequel diamètre maximal ($d_{max}$) résulte de la relation

$$d_{max} = \frac{a \cdot j'(Z_r, 1)}{\pi \cdot n_{TL} \cdot Z_r}$$

avec a = vitesse du son, $j'(Z_r, 1)$ = valeur propre du mode $(Z_r, 1)$, $Z_r$ = nombre de palettes mobiles et $n_{TL}$ = vitesse de rotation du turbocompresseur à gaz d'échappement pour laquelle le silencieux (17) est conçu, cette vitesse de rotation nominale étant au moins égale aux deux tiers de la vitesse de rotation maximale du turbocompresseur à gaz d'échappement.

2. Compresseur selon la revendication 1, **caractérisé en ce qu'**un tissu, une nappe de fibres ou un élément plat perforé est conformé comme capot acoustiquement transparent (18).

3. Compresseur selon la revendication 1 ou 2, **caractérisé en ce qu'**un interstice de séparation (20) est ménagé entre le capot (18) et le silencieux (17).

4. Compresseur selon la revendication 1 ou 2, **caractérisé en ce qu'**un élément conduisant le son (21) s'étendant aussi bien radialement qu'axialement, sur lequel le silencieux (17) se connecte, est monté radialement à l'extérieur du capot (18).

5. Compresseur selon l'une quelconque des revendications précédentes, **caractérisé en ce qu'**un silencieux classique (16) est monté en amont du compresseur (1).

Fig. 1

Stand der Technik

Fig. 2

Fig. 3

Fig. 4

Fig. 5